# EUROPEAN PATENT SPECIFICATION

(11) **EP 2 992 385 B1**
(45) Date of publication and mention of the grant of the patent: **19.12.2018**
(21) Application number: 13722233.7
(22) Date of filing: 02.05.2013
(51) Int. Cl.: G03B 21/58, G03B 21/62, G03B 17/54, G06F 3/042, G06F 1/16, G03B 21/28

(54) **REAR PROJECTION SYSTEM WITH A FOLDABLE PROJECTION SCREEN FOR MOBILE DEVICES**
RÜCKPROJEKTIONSYSTEM MIT FALTBAREM PROJEKTIONSSCHIRM FÜR MOBILGERÄTE
SYSTÈME DE RÉTROPROJECTION AVEC ÉCRAN DE PROJECTION PLIABLE POUR ÉQUIPEMENT MOBIL

(43) Date of publication of application: 09.03.2016
(73) Proprietor: Thomson Licensing SAS, 92130 Issy-les-Moulineaux (FR)
(72) Inventor: SCHULTZ, Mark Alan, Billings, Missouri 65610 (US)
(74) Representative: Rolland, Sophie
(86) International application number: PCT/US2013/039181
(87) International publication number: WO 2014/178864

(56) References cited:
- CN-A- 102 945 105
- US-A- 4 323 301
- US-A1- 2006 050 169
- US-A1- 2010 045 569
- US-A1- 2011 148 797
- US-A1- 2012 244 910

## Description

### Field of the Invention

The invention relates to a portable projection screen for a video display device. In particular, the invention relates to a portable rear projection screen.

### Background of the Invention

A pico projector is a term directed herein to a small-format hand held projector that can be used as a standalone projector or as an integrated component in hand held portable devices. The pico projector uses similar technology to that which powers a standard projector and a rear-projection television. The small size of the pico projector can be directed for use of a single viewer and can be associated with a light weight screen.

It may be desirable to include in a rear projection system a pico projector that illuminates a foldable screen installed in a foldable frame. Advantageously, rear projection system that includes a pico projector can be made to be far less sensitive than front projection system to being washed out by background lighting which can limit portable front projection system usefulness. Advantageously, the alignment of the projector of a rear projection system with respect to the screen is not critical since the user has a focus adjustment already built into the projector. With laser projection, focus would even be unnecessary.

Typically, pico projectors are designed to be front projectors. When a front projector is used in a rear projection system, the displayed image on the screen, unless corrected, would be flipped left- to- right. One solution to this image flipping problem is to use a mirror for reflecting the light produced by the projector on a rear projection screen as the target for the reflected light. Another solution is to pre-process the video signal that is applied to the pico projector by employing image reversal and rotation.

It may also be desirable to provide the foldable screen with a feature that makes it a touchscreen. For example, light sensors can be installed either in a front side of the screen, with respect to the viewer, looking for obstructions, or in a back side of the screen looking for screen displacements. Alternatively, touch sensing can be achieved remotely by using infra-red (IR) imaging from an imager or camera pointed at the back side of the screen. If the pico projector has already a built in camera assembly, additional cost of making it a touch screen might be merely that of providing an IR band pass filter and some software. Known portable projection screens are shown in US20100045569A and US201520244910A.

### Summary of the Invention

A portable projection screen according to the invention is defined by claim 1. A projection system according to the invention is defined in claim 4.

A rear projection system, embodying an inventive feature, includes a display screen having an expandable surface that is selectively expanded to display thereon a rear projected image produced by a portable, hand held or pico projector. The display screen is selectively folded for enhancing portability. A foldable frame is selectively unfolded for supporting the screen, when the screen surface is expanded. The foldable frame is selectively folded for enhancing portability. A sensor makes the screen a touchscreen when the screen surface is expanded.

### Brief Description of the Drawings

The preferred embodiment of the present invention will be described below in more detail with reference to the accompanying drawings in which:
FIGURE 1a illustrates a side view of a rear projection system, embodying an inventive feature;
FIGURES 1b and 1c illustrate alternative ways of forming touchscreen in the arrangement of FIGURE 1a;
FIGURE 2 illustrates a front view of fully assembled foldable screen assembly of FIGURE 1a;
FIGURE 3 illustrates a front view of the foldable screen assembly of FIGURE 2 in which a foldable screen is completely folded;
FIGURE 4 illustrates a front view of the foldable screen assembly of FIGURE 2 in which the screen is pull down approximately half way down;
FIGURE 5 illustrates a front view of the foldable screen assembly of FIGURE 2 in which the foldable screen is completely folded and a frame is partially folded;
FIGURE 6 illustrates a front view of the foldable screen assembly of FIGURE 5 in which the foldable screen is completely folded and a frame is partially folded further than in FIGURE 5;
FIGURE 7a illustrates a front view and FIGURE 7b illustrates a side view of the foldable screen assembly of FIGURE 2 in which each of the foldable screen and the frame is completely folded; and
FIGURES 8a and 8b illustrate corresponding solutions for an image flipping problem that occurs when a front projector is incorporated in the rear projection system of FIGURE 1a.

### Detailed Description

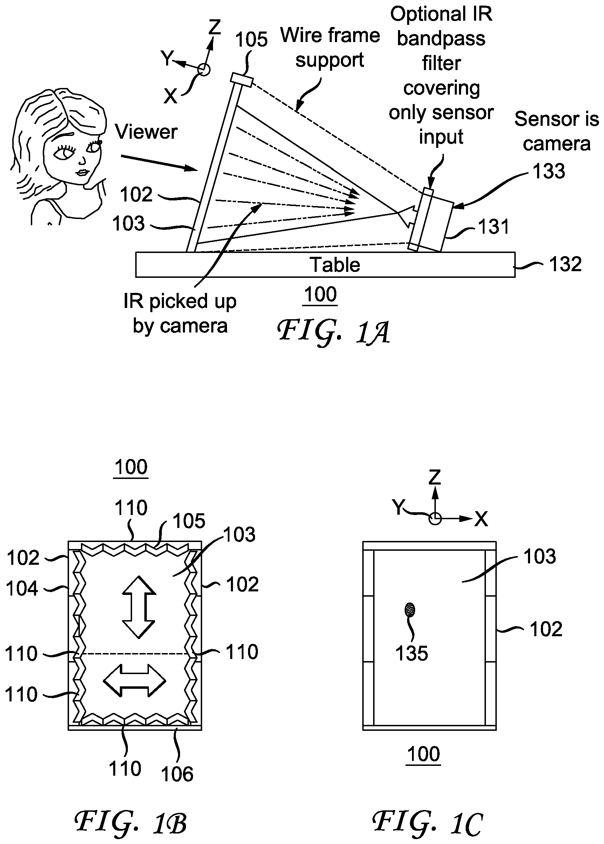

FIGURE 1a illustrates a side view of foldable screen assembly 100, embodying an inventive feature. In FIGURE 1a, assembly 100 is fully unfolded and ready for displaying an image, not shown. A hand held portable projector 131 that is referred to herein as pico projector 131 is mounted on a base 132 in the back of assembly 100 to form a rear projector. Pico projector 131 is driven by a video apparatus, not shown, such as a computer. Screen assembly 100 is interposed between a viewer and pico-projector 131. Selectively, screen assembly 100 can be rotated on its side to change from a letter to a landscape type display.

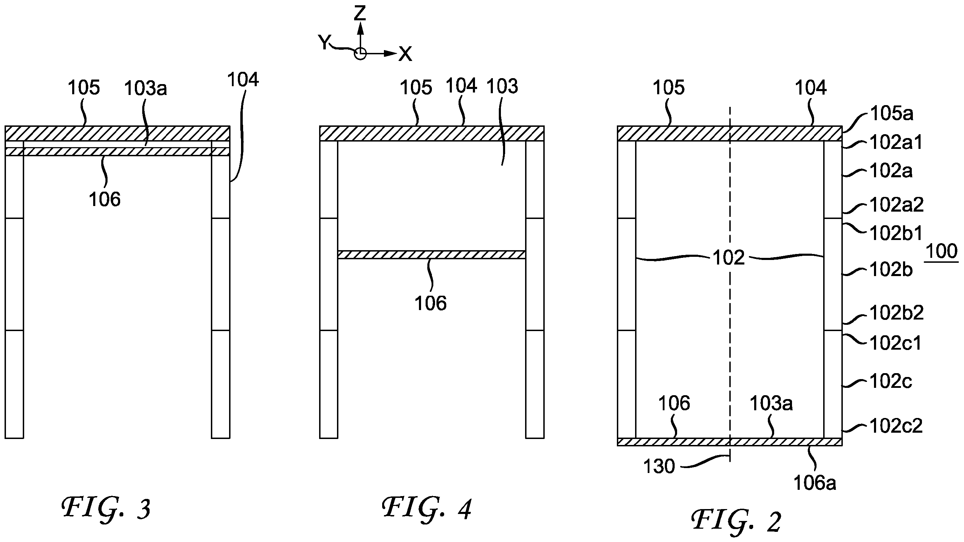

FIGURE 2 illustrates a front view of foldable screen assembly 100 of FIGURE 1a that includes a contractable or foldable screen 103 mounted in a rectangular foldable frame 104. In FIGURE 2, assembly 100 is fully assembled, as in FIGURE 1a, such that each of foldable screen 103 and foldable frame 104 is completely unfolded. Similar symbols and numerals in FIGURES 1a and 2 indicate similar items or functions. In FIGURE 2, constituent members or parts of foldable frame 104 are firmly locked to one another in a manner to form a rigid body that maintains its rectangular shape, as explained later on.

.Foldable frame 104 includes a pair of substantially identical side portions 102 disposed at the right and left sides, respectively, of Figure 2. An upper portion 105 of frame 104 is disposed perpendicularly to each of side portions 102 and forms a bridge type connection between portions 102. Each side portion 102 includes a tubular, top section 102a, a tubular, middle section 102b and a tubular, bottom section 102c. An upper end 102b1 of middle section 102b is rigidly fastened to a lower end 102a2 of top section102a, when frame 104 is unfolded. A lower end 102b2 of middle section 102b is rigidly fastened to an upper end 102c1 of bottom section 102c, when frame 104 is unfolded. Upper portion 105 has a right end 105a that is rigidly fastened to a top end 102a1 of section 102a, when frame 104 is unfolded.

Screen 103 has a bottom edge 103a that is firmly attached to a lower portion 106 of frame 104. Lower portion 106 is disposed perpendicularly to each of side portions 102 and in parallel with portion 105, when frame 104 is unfolded. Lower portion 106 has a right end 106a that is rigidly fastened to a bottom end 102c2 of section 102c, when frame 104 is unfolded. This can be obtained by connecting right end 106a to bottom end 102c2 using lockable hinges, by having them fit or slide into one another or by some other suitable means. In a similar way, ends 102c1 and 102b2 can be rigidly connected to each other. The same would be applicable to the rigid connection of ends 102a2 and 102b1. Also, the same would be applicable to the rigid connection of ends 105a and 102a1.

Side portions 102, top portion 105 and bottom portion 106 of frame 104 are disposed symmetrically with respect to a longitudinal symmetry axis 130 to form the rectangular shape of frame 104. Unfolded screen 103 is disposed between the pair of side portions 102, when frame 104 is unfolded.

FIGURE 3 illustrates a front view of foldable screen assembly 100 of FIGURE 2 in which foldable screen 103 is completely folded and is disposed in a manner, not shown, close to upper portion 105 of frame 104. Similar symbols and numerals in FIGURES 1a, 2 and 3 indicate similar items or functions.

FIGURE 4 illustrates a front view of foldable screen assembly 100 of FIGURE 2 in which screen 103 is pull down approximately half way down between its completely unfolded position, shown in FIGURE 2, and its completely folded position, shown in FIGURE 3. Similar symbols and numerals in FIGURES 1a, 2, 3 and 4 indicate similar items or functions.

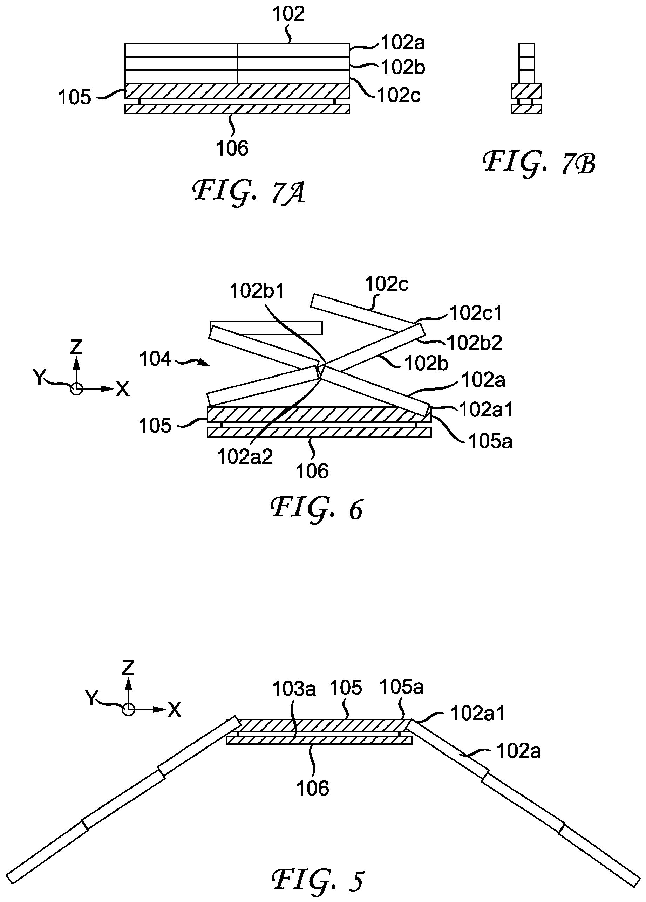

FIGURE 5 illustrates a front view of foldable screen assembly 100 of FIGURE 2 in which foldable screen 103 is completely folded in the same way as in FIGURE 3 and frame 104 is partially folded. In Figure 5, side portions 102 of frame 104 are partially collapsed or rotated to be no longer perpendicular to upper portion 105. Thus, the connection of end portion 105a of upper portion 105 and end portion 102a1 of side section 102a is no longer rigid and perpendicular but, instead, loose in a manner to enable the pivotal rotation of section 102a with respect to upper portion 105. Similar symbols and numerals in FIGURES 1a, 2, 3, 4 and 5 indicate similar items or functions.

FIGURE 6 illustrates a front view of foldable screen assembly 100 of FIGURE 2 in which foldable screen 103 is completely folded in the same way as in FIGURE 3 and frame 104 is further folded with respect to FIGURE 5. In FIGURE 6, each of sections 102a, 102b and 102c of side portions 102 is pivotally rotated to be on the opposite side of portion 105 with respect FIGURES 2, 3, 4 and 5. Additionally, each of sections 102a, 102b and 102c of FIGURE 6 is inclined with respect to the corresponding adjacent section of portion 102. In partially folded or partially unfolded frame 104, end 102b1 of middle section 102b is no longer rigidly fastened to end 102a2 of section102a. Instead, a junction between end 102b1 and end 102a2 forms a pivot of rotation. Similarly, a junction between end 102b2 and end 102c1 also forms a pivot of rotation. In the same way, a junction between end 102a1 and right end 105a of upper portion 105 also forms a pivot of rotation. Similar symbols and numerals in FIGURES 1a, 2, 3, 4, 5 and 6 indicate similar items or functions.

FIGURE 7a illustrates a front view of foldable screen assembly 100 of FIGURE 2 in which foldable screen 103 is completely folded in the same way as in FIGURE 3. Additionally, frame 104 is completely folded in that each of sections 102a, 102b and 102c of each side portions 102 is rotated to be parallel disposed with respect to each of the other sections of portion 102 and with respect to portions 105 and 106. As in FIGURE 6, each of sections 102a, 102b and 102c of side portions 102 is rotated to be on the opposite side of portion 105 with respect FIGURES 2, 3 and 4. FIGURE 7b illustrates a side view of completely folded screen assembly 100 of FIGURE 7a. Similar symbols and numerals in FIGURES 1a, 2, 3, 4, 5, 6, 7a and 7b indicate similar items or functions.

FIGURE 1b illustrates a front view of system 100 of FIGURE 1a. In carrying out an inventive feature, screen 103 of FIGURE 1b forms a user interface touchscreen adapted to interact with a video apparatus, not shown, such as, for example, a computer or an electronic tablet. Similar symbols and numerals in FIGURES 1a, 1b, 2, 3, 4, 5, 6, 7a and 7b indicate similar items or functions.

In FIGURE 1b, a corresponding part of each sensor element 110 of a series of sensor elements 110 is built into an edge of each of frame side portions 102, an edge of portion 105 and an edge portion 106. Each sensor element 110 of the series of sensor elements 110 associated with side portions 102 of frame 104 includes a light source part that is installed on, for example, left side portion 102 and a corresponding light sensor part that is installed on right side portion 102.

As long as the user/viewer does not interrupt a ray of light emitted from the light source part of sensor element 110, the light sensor part of element 110 is illuminated. On the other hand, when, for example, a finger of the user/viewer is interposed in the path of the ray of light, the light sensor part of element 110 is not illuminated. Accordingly, a vertical position Y of the finger with respect to screen 103 can be evaluated by a processor, not shown.

Similarly, each sensor element 110 of the series of sensor elements 110 associated with upper portion 105 and lower portion 106 of frame 104 includes a light source part that is installed on, for example, upper portion 105 and a corresponding light sensor part that is installed on lower portion 106. Accordingly, a horizontal position X of the finger with respect to screen 103 can be evaluated by the processor, not shown.

Sensor elements 110 may be disposed in a front of screen 103 with respect to a viewer of FIGURE 1a so as to detect the aforementioned blocking of light by, for example, a finger of the user/viewer; alternatively, light sensor elements 110 of FIGURE 1b may be disposed in a back of screen 103 with respect to the viewer of FIGURE 1a so as to detect deflection of screen 103 when touched by the viewer. Thus, screen 103 forms a user interface touchscreen adapted to interact with a video apparatus, not shown, such as, for example, a computer or an electronic tablet that is responsive to light sensor elements 110 of FIGURE 1b.

Instead of using light sensor elements 110 of FIGURE 1b, a camera 133 of FIGURE 1a, operating as an IR light sensor, may be combined in the same assembly with pico-projector 131. When a finger of, for example, a user/viewer touches screen 103, the touching finger sets up an abrupt change in an IR energy of a camera captured thermal image 135 that is shown in FIGURE 1c. Thermal image 135 is mapped onto the pixel array, not shown, of camera 133 of FIGURE 1a that senses the user finger touch on screen 103. Thus, screen 103 forms a user interface touchscreen. Similar symbols and numerals in FIGURES 1a, 1b, 1c, 2, 3, 4, 5, 6, 7a and 7b indicate similar items or functions.

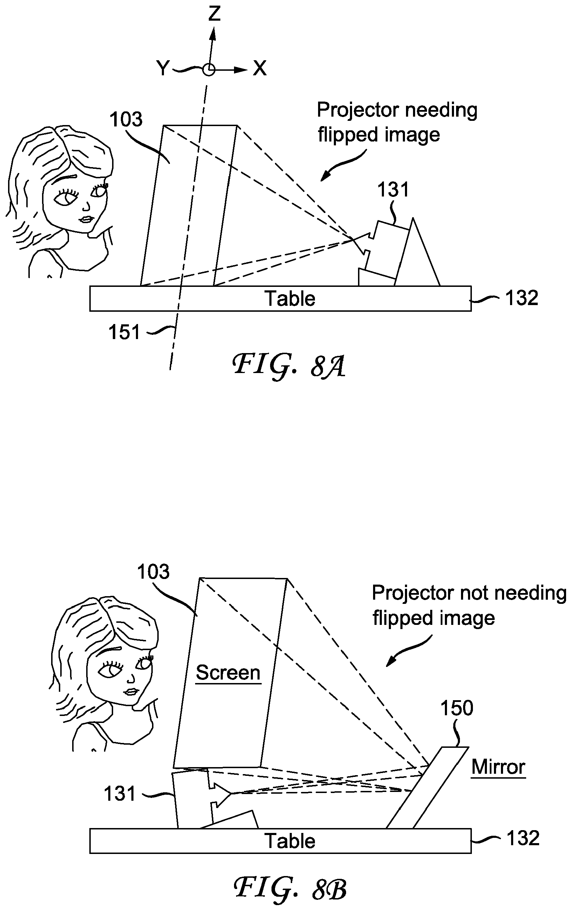

Pico projector 131 is, typically, the type designed to be used as a front projector. Without correction, pico projector 131, utilized as a rear projector such as in FIGURE 1a would produce a projected image that needs image flipping correction. FIGURE 8a is provided for explaining the need for such image correction and a first correction solution for such problem. FIGURE 8b is provided for explaining a second correction solution for such problem. Similar symbols and numerals in FIGURES 1a, 1b, 1c, 2, 3, 4, 5, 6, 7a, 7b, 8a and 8b indicate similar items or functions.

Unlike in a front projector situation, the viewer looks into the direct light produced by projector 131, instead of at the reflected light from screen 103. Without correction, the image produced by the direct light from pico projector 131 would be improperly flipped left side-to- right side, and vice versa, with respect to an axis of symmetry 130 of FIGURE 8a. In a first solution to this problem, demonstrated in FIGURE 8a , an image contained in a memory, not shown, of pico projector 131 would be electronically processed by a signal processor, not shown, so as to be flipped left side-to- right side, and vice versa. In this way, the viewed image would no longer be incorrectly flipped. In an alternative solution to this problem, a mirror 150 of FIGURE 8b would reflects the image to be optically flipped left side-to- right side, and vice versa, so that the viewed image would no longer be incorrectly flipped.

## Claims

1. A portable projection screen for a video display device, comprising:
a contractable or foldable screen (103) having an expandable display surface to display thereon an image produced by the video display device (131);
a foldable frame (104) capable of being folded for enhancing portability and capable of being unfolded to form a support for said contractable or foldable screen when said expandable display surface is expanded;
said foldable frame comprising an upper portion (105), a lower portion (106), side portions (102), each of the side portions being rotatable attached on one end to a different end of the upper portion and each of the side portions comprising a plurality of rotatable connected sections;
the foldable frame being configured to comprise an unfolded configuration, wherein the side portions are unfolded by rotation around their rotatable attachment on the upper portion such that they are perpendicular to the upper portion and wherein the sections of each side portion are unfolded by rotation around their rotatable connections, the expandable display surface, being attached to the lower portion and being between the side portions, being expanded when the lower portion is moved away from the upper portion, the foldable frame thereby forming a rectangular shape;and
the foldable frame being further configured to comprise a folded configuration, wherein the foldable frame is folded in that each of the sections of the side portions are rotated around their rotatable attachment and folded around their rotatable connections to be parallel with respect to the upper portion and on top of the upper portion, the lower portion being approached to the upper portion and being parallel to the upper portion.

2. The portable projection screen of Claim 1, wherein said side portions and the upper and lower portions are configured to include corresponding parts of sensor elements comprising light sources and light sensors, the light sensors being configured to sense blocking of the light sources at a vertical position Y and a horizontal position X, for forming a touchscreen adapted to interact with the video display device.

3. The portable projection screen of Claim 2, wherein said sensor elements are configured behind the expandable display surface with respect to a viewer of the image, the blocking of the light sources being occasioned by deflection of the expandable display surface when touched by the viewer.

4. A projection system comprising a portable projection screen according to any of claims 1 to 3 and a video display device for displaying on the portable projection screen an image produced by the video display device.

5. The projection system according to claim 4, wherein the video display device is configured to project said image on the rear of the expandable display surface when the image is viewed by a viewer in front of the portable projection screen, the video display device comprising left-right image flipping.

6. The projection system according to claim 5, further comprising a mirror for the left-right image flipping.

7. The projection system according to claim 5, further comprising a signal processor for the left-right image flipping.

8. The projection system according to any of claims 4 to 7, wherein the video display device is any of a portable, hand held or pico projector (131).

## Patentansprüche

1. Tragbarer Projektionsbildschirm für eine Videoanzeigevorrichtung, wobei der Projektionsbildschirm umfasst:
einen kontrahierbaren oder zusammenklappbaren Bildschirm (103) mit einer dehnbaren Anzeigefläche, um darauf ein durch die Videoanzeigevorrichtung (131) erzeugtes Bild anzuzeigen;
einen zusammenklappbaren Rahmen (104), der zusammengeklappt werden kann, um die Tragbarkeit zu verbessern, und der auseinandergeklappt werden kann, um für den kontrahierbaren oder zusammenklappbaren Bildschirm eine Halterung zu bilden, wenn die dehnbare Anzeigefläche gedehnt wird;
wobei der zusammenklappbare Rahmen einen oberen Abschnitt (105), einen unteren Abschnitt (106), Seitenabschnitte (102) umfasst, wobei jeder der Seitenabschnitte an einem Ende drehbar an einem anderen Ende des oberen Abschnitts angebracht ist und wobei jeder der Seitenabschnitte mehrere drehbar verbundene Teilabschnitte umfasst;
wobei der zusammenklappbare Rahmen so konfiguriert ist, dass er eine aufgeklappte Konfiguration umfasst, bei der die Seitenabschnitte durch Drehung um ihre drehbare Anbringung an dem oberen Abschnitt aufgeklappt sind, so dass sie zu dem oberen Abschnitt senkrecht sind, und wobei die Teilabschnitte jedes Seitenabschnitts durch Drehung um ihre drehbaren Verbindungen aufgeklappt werden, wobei die dehnbare Anzeigefläche, die an dem unteren Abschnitt angebracht ist und die sich zwischen den Seitenabschnitten befindet, gedehnt wird, wenn der untere Abschnitt von dem oberen Abschnitt wegbewegt wird, wobei der zusammenklappbare Rahmen dadurch eine Rechteckform bildet; und
wobei der zusammenklappbare Rahmen ferner so konfiguriert ist, dass er eine zusammengeklappte Konfiguration umfasst, wobei der zusammenklappbare Rahmen dadurch zusammengeklappt wird, dass jeder der Teilabschnitte der Seitenabschnitte um seine drehbare Anbringung gedreht wird und um seine drehbaren Verbindungen geklappt wird, damit sie in Bezug auf den oberen Abschnitt und auf die Oberseite des oberen Abschnitts parallel werden, wobei der untere Abschnitt an den oberen Abschnitt angenähert wird und zu dem oberen Abschnitt parallel ist.

2. Tragbarer Projektionsbildschirm nach Anspruch 1, wobei die Seitenabschnitte und der obere und der untere Abschnitt so konfiguriert sind, dass sie entsprechende Teile von Sensorelementen enthalten, die Lichtquellen und Lichtsensoren umfassen, wobei die Lichtsensoren so konfiguriert sind, dass sie das Versperren der Lichtquellen bei einer vertikalen Position Y und bei einer vertikalen Position X erfassen, um einen Berührungsbildschirm zu bilden, der dafür ausgelegt ist, mit der Videoanzeigevorrichtung zusammenzuwirken.

3. Tragbarer Projektionsbildschirm nach Anspruch 2, wobei die Sensorelemente in Bezug auf einen Betrachter des Bilds hinter der dehnbaren Anzeigefläche konfiguriert sind, wobei das Versperren der Lichtquellen durch Durchbiegung der dehnbaren Anzeigefläche, wenn sie durch den Betrachter berührt wird, veranlasst wird.

4. Projektionssystem, das einen tragbaren Projektionsbildschirm nach einem der Ansprüche 1 bis 3 und eine Videoanzeigevorrichtung, um auf dem tragbaren Projektionsbildschirm ein durch die Videoanzeigevorrichtung erzeugtes Bild anzuzeigen, umfasst.

5. Projektionssystem nach Anspruch 4, wobei die Videoanzeigevorrichtung so konfiguriert ist, dass sie das Bild auf die Rückseite der dehnbaren Anzeigefläche projiziert, wenn das Bild durch einen Betrachter vor dem tragbaren Projektionsbildschirm betrachtet wird, wobei die Videoanzeigevorrichtung eine Links-rechts-Bildspiegelung umfasst.

6. Projektionssystem nach Anspruch 5, das ferner einen Spiegel zur Links-rechts-Bildspiegelung umfasst.

7. Projektionssystem nach Anspruch 5, das ferner einen Signalprozessor zur Links-rechts-Bildspiegelung umfasst.

8. Projektionssystem nach einem der Ansprüche 4 bis 7, wobei die Videoanzeigevorrichtung ein tragbarer Projektor oder ein Handprojektor oder ein Pico-Projektor (131) ist.

## Revendications

1. Écran de projection portable pour un dispositif d'affichage vidéo, comprenant :
un écran rétractable ou pliable (103) possédant une surface d'affichage extensible pour y afficher une image produite par le dispositif d'affichage vidéo (131) ;
un cadre pliable (104) pouvant être plié pour améliorer la portabilité et pouvant être déplié pour former un support pour ledit écran rétractable ou pliable lorsque ladite surface d'affichage extensible est étendue ;
ledit cadre pliable comprenant une partie supérieure (105), une partie inférieure (106), des parties latérales (102), chacune des parties latérales étant rotative et fixée sur une extrémité à une extrémité différente de la partie supérieure et chacune des parties latérales comprenant une pluralité de sections connectées rotatives ;
le cadre pliable étant configuré pour comprendre une configuration dépliée, où les parties latérales sont dépliées par rotation autour de leur fixation rotative sur la partie supérieure de sorte qu'elles soient perpendiculaires à la partie supérieure et où les sections de chaque partie latérale sont dépliées par rotation autour de leurs connexions rotatives, la surface d'affichage extensible étant fixée à la partie inférieure et se situant entre les parties latérales, étant étendue lorsque la partie inférieure est éloignée de la partie supérieure, le cadre pliable prenant alors une forme rectangulaire ; et
le cadre pliable étant en outre configuré pour comprendre une configuration pliée, où le cadre pliable est plié de sorte que chacune des sections des parties latérales pivote autour de sa fixation rotative et se plie autour de ses connexions rotatives de sorte à être parallèle à la partie supérieure et à se situer au-dessus de la partie supérieure, la partie inférieure étant rapprochée de la partie supérieure et étant parallèle à la partie supérieure.

2. Écran de projection pliable selon la revendication 1, dans lequel lesdites parties latérales et les parties supérieure et inférieure sont configurées pour inclure des parties correspondantes d'éléments de capteur comprenant des sources de lumière et des capteurs de lumière, les capteurs de lumière étant configurés pour détecter le blocage des sources de lumière à une position verticale Y et une position horizontale X pour former un écran tactile adapté pour interagir avec le dispositif d'affichage vidéo.

3. Écran de projection portable selon la revendication 2, dans lequel lesdits éléments de capteur sont configurés derrière la surface d'affichage extensible par rapport à un spectateur qui regarde l'image, le blocage des sources de lumière étant occasionné par la déflexion de la surface d'affichage extensible lorsque celle-ci est touchée par le spectateur.

4. Système de projection comprenant un écran de projection portable selon l'une quelconque des revendications 1 à 3 et un dispositif d'affichage vidéo pour afficher sur l'écran de projection portable une image produite par le dispositif d'affichage vidéo.

5. Système de projection selon la revendication 4, dans lequel le dispositif d'affichage vidéo est configuré pour projeter ladite image à l'arrière de la surface d'affichage extensible lorsque l'image est regardée par un spectateur situé face à l'écran de projection portable, le dispositif d'affichage vidéo comprenant une inversion d'image gauche-droite.

6. Système de projection selon la revendication 5, comprenant en outre un miroir pour l'inversion d'image gauche-droite.

7. Système de projection selon la revendication 5, comprenant en outre un processeur de signal pour l'inversion d'image gauche-droite.

8. Système de projection selon l'une quelconque des revendications 4 à 7, dans lequel le dispositif d'affichage vidéo est un projecteur portable, un projecteur portatif ou un picoprojecteur (131).
